# EUROPEAN PATENT APPLICATION

(11) **EP 4 111 887 A1**
(43) Date of publication of application: **04.01.2023**
(21) Application number: 20928089.0
(22) Date of filing: 02.04.2020
(51) Int. Cl.: A24F 40/46, A24F 40/57

(54) **HEATED AEROSOL GENERATION DEVICE AND METHOD**

(71) Applicant: Shenzhen Merit Technology Co., Ltd., Shenzhen, Guangdong 518000 (CN)
(72) Inventor: HU, Changhe, Shenzhen, Guangdong 518000 (CN); ZHANG, Xingfu, Shenzhen, Guangdong 518000 (CN); DOU, Hengheng, Shenzhen, Guangdong 518000 (CN); LI, Yafei, Shenzhen, Guangdong 518000 (CN)
(74) Representative: Westphal, Mussgnug & Partner, Patentanwälte mbB
(86) International application number: PCT/CN2020/082995
(87) International publication number: WO 2021/196128

(57) **Abstract**

The invention discloses a heating type aerosol generation device and method. The heating type aerosol generation method includes: in a first phase, controlling a power source provided to a heating element to cause a temperature of the heating element to rise from an initial temperature to a first temperature; in a second phase, controlling the power source provided to the heating element to cause the temperature of the heating element to drop from the first temperature to a second temperature, wherein the second temperature is less than the first temperature; and in a third phase, controlling the power source provided to the heating element to keep the temperature of the heating element at the second temperature.

## Description

### FIELD OF THE INVENTION

The present invention relates to the field of aerosol generating device, and more particularly to a heating type aerosol generation device and method.

### DESCRIPTION OF THE RELATED ART

In a low-temperature heating cigarette device, it is expected that an aerosol generation device may generate required aerosol during heating period. Particularly, when the aerosol is provided for consumption by human beings, during the course of consecutive or repeated heating, the amplitude of heating temperature fluctuation may impact variation of the aerosol substance that carries nicotine and fragrances. Consequently, it is significant to control the heating temperature to provide required aerosol substance.

### SUMMARY OF THE INVENTION

The technical issue that the present invention aims to resolve is to provide, in view of the drawback that the prior art suffers in respect of being incapable of providing required aerosol substance, a heating type aerosol generation device and method.

The technical solution that the present invention adopts to resolve the technical issues is to provide a heating type aerosol generation method, which comprises:
in a first phase, controlling a power source provided to a heating element to such that a temperature of the heating element rises from an initial temperature to a first temperature;
in a second phase, controlling the power source provided to the heating element to such that the temperature of the heating element drops from the first temperature to a second temperature, wherein the second temperature is less than the first temperature; and
in a third phase, controlling the power source provided to the heating element such that the temperature of the heating element maintains at the second temperature.

Preferably, in the first phase, the temperature of the heating element rises with time in a curvilinear form;
in the second phase, the temperature of the heating element drops with time in a curvilinear form; and
in the third phase, the temperature of the heating element is stabilized in a rectilinear form.

Preferably, the following is further included:
controlling the power source provided to the heating element such that the temperature of the heating element to be kept within a predetermined allowable temperature range in the second phase and the third phase.

Preferably, the allowable temperature range has an upper limit between 450°C-500°C and a lower limit between 250°C-300°C.

Preferably, the first temperature is between 300°C-450°C; and
the second temperature is between 300°C-400°C.

Preferably, a time period of the first phase is less than 20 seconds;
a time period of the second phase is greater than 20 seconds; and
a time period of the third phase is 200-600 seconds.

Preferably, in the second phase and the third phase, controlling the power source provided to the heating element to make the temperature of the heating element reach the second temperature is performed with the following process:
detecting a temperature of the heating element in order to acquire a temperature detection value;
subjecting the temperature detection value and the second temperature to PID computation in order to acquire first heating control information; and
controlling the heating element to carry out periodic heating according to the first heating control information;
   or,
detecting a resistance of the heating element in order to acquire a resistance detection value;
subjecting the resistance detection value and a target resistance value to PID computation in order to acquire second heating control information, wherein the target resistance value is determined by the second temperature;
controlling the heating element to carry out periodic heating according to the second heating control information.

Preferably, the step of detecting a temperature of the heating element to acquire a temperature detection value comprises:
detecting the resistance of the heating element in a deactivation interval of a heating cycle of the heating element, in order to acquire the resistance detection value; and
determining the temperature detection value of the heating element according to the resistance detection value.

Preferably, after the step of determining the temperature detection value of the heating element according to the resistance detection value, the following is further included:
subjecting the temperature detection value to compensation processing according to a device-cold/device-warm state of the heating element.

Preferably, the following is further included:
subjecting the second temperature to compensation processing according to an environment temperature.

Preferably, the following is further included:
determining whether the temperature detection value or the resistance detection value is within a preset range or not; and
controlling the heating element to stop heating if not within the preset range.

Preferably, the following is further included:
determining whether the power source provided to the heating element in a predetermined time interval exceeds a preset energy value or not; and
controlling the heating element to stop heating if exceeding the preset energy value.

Preferably, the following is further included:
in a fourth phase, controlling the power source provided to the heating element to cause the temperature of the heating element to gradually drop from the second temperature.

The present invention also constructs a heating type aerosol generation device, which comprises a heating element and a power source operable to supply energy to the heating element, and further comprises:
a control circuit, which is operable to control a power source provided to the heating element to cause a temperature of the heating element to rise from an initial temperature to a first temperature in a first phase; to control the power source provided to the heating element to cause the temperature of the heating element to drop from the first temperature to a second temperature in a second phase, wherein the second temperature is less than the first temperature; and to control the power source provided to the heating element to keep the temperature of the heating element at the second temperature in a third phase.

Preferably, the control circuit comprises:
a detection module, which is operable to detect a temperature/resistance of the heating element in order to acquire a temperature/resistance detection value; and
a microprocessor, which is operable to subject the temperature/resistance detection value and the second temperature/target resistance to PID computation in order to acquire heating control information, and to control the heating element to carry out periodic heating according to the heating control information, wherein the target resistance is determined by the second temperature.

Preferably, the detection module comprises: a first transistor, a second transistor, a third transistor, and a reference resistor, wherein a first end of the first transistor and a first end of the second transistor are connected to a positive terminal of the power source; a second end of the first transistor is connected to a first end of the reference resistor; a second end of the reference resistor and a second end of the second transistor are connected to a first end of the heating element; a second end of the heating element is connected to a first end of the third transistor; a second end of the third transistor is grounded; a first input terminal of the microprocessor is connected to the second end of the first transistor; a second input terminal of the microprocessor is connected to the second end of the reference resistor; a third input terminal of the microprocessor is connected to the second end of the heating element; the first output terminal of the microprocessor is connected to the control terminal of the first transistor; the second output terminal of the microprocessor is connected to the control terminal of the second transistor; and the third output terminal of the microprocessor is connected to the control terminal of the third transistor.

Preferably, the first transistor comprises an NPN type triode, and the first end of the first transistor is the collector terminal, the second end of the first transistor is the emitter terminal, the control terminal of the first transistor is the base terminal;
the second transistor comprises a P type FET(Field Effect Transistor), and the first end of the second transistor is the source terminal, the second end of the second transistor is the drain terminal, the control terminal of the second transistor is the gate terminal; and
the third transistor comprises an N type FET, and the first end of the third transistor is the drain terminal, the second end of the third transistor is the source terminal, the control terminal of the third transistor is the gate terminal.

The technical solution of the present invention is embodied so that it is possible to ensure that a cigarette cartridge can continuously generate gel at an optimum temperature by setting a target temperature (the second temperature that is less than the first temperature) for the second phase, and the heat conduction rate of the heating element to the cigarette cartridge is increased by stably holding the second temperature in the third phase, so that it is possible to provide required aerosol substance.

### BRIEF DESCRIPTION OF THE DRAWINGS

The present invention will be further expounded in the following, with reference to the attached drawings and embodiments, and in the drawings:
FIG. 1 is a flow chart showing a heating type aerosol generation method according to a first embodiment of the present disclosure;
FIG. 2 is a schematic illustration showing a temperature profile of a heating element according to the first embodiment of the present disclosure;
FIG. 3 is a structure illustration showing a heating type aerosol generation device according to the first embodiment of the present disclosure;
FIG. 4 is a circuit illustration of the heating type aerosol generation device according to the first embodiment of the present disclosure; and
FIG. 5 is a schematic illustration showing a temperature profile of a heating element according to a second embodiment of the present disclosure.

### DETAILED DESCRIPTION OF EMBODIMENTS

The following provides a clear and complete description of technical solutions according to embodiments of the present invention, with reference to the drawings of the embodiments of the present invention. It is obvious that the embodiments so described demonstrate only some, but not all, of the ways for embodying the present invention. All other embodiments that are contemplated by those having ordinary skill in the art, without casting creative endeavor are considered falling in the scope of protection for the present invention.

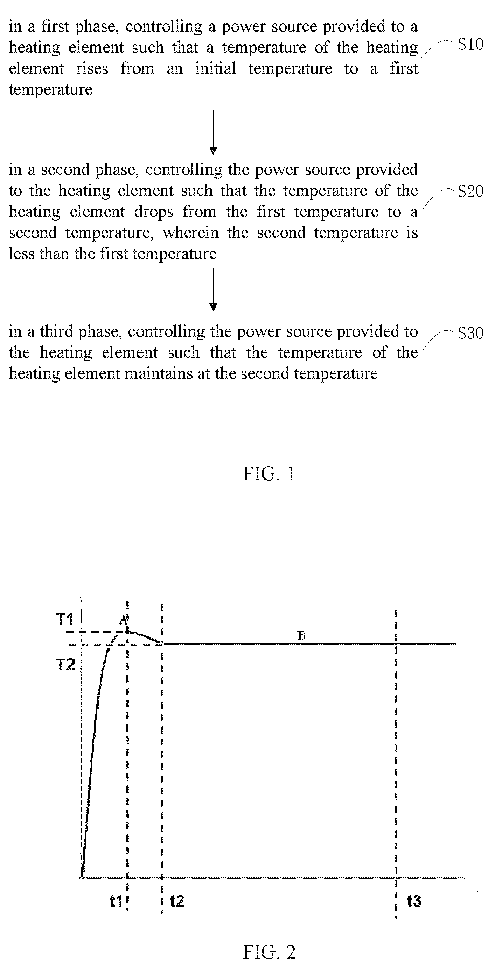

FIG. 1 is a flow chart showing a heating type aerosol generation method according to an embodiment of the present disclosure. The heating type aerosol generation method of the embodiment is applied to a control circuit of a heating type aerosol generation device. It is noted that the heating type aerosol generation device may further comprise a heating element and a power source, in which the power source supplies energy to the heating element, and the power source can be a battery, such as a rechargeable lithium ion battery, a nickel metal hydride battery, a nickel-cadmium battery, or a lithium-based battery. The heating element, which is also referred to as a heater, can be of various forms, such as a heating blade, a heating needle, a heating rod, or a heating wire or filament, or alternatively, the heating element can also be a combination of two or more different forms of the above heating element.

Jointly referring to FIG. 2, the heating type aerosol generation method of the embodiment specifically comprises the following steps:
Step S10: in a first phase, controlling a power source provided to the heating element to such that a temperature of the heating element rises from an initial temperature to a first temperature.

In the step, the first phase includes a time period of 0-t1, and the phase is a fast temperature rise phase. In this phase, allowable temperature setting is in principle the temperature at which a volatile compound contained in a cigarette cartridge that is expected to volatilize can volatilize fast, but is lower than a vaporization temperature of a non-expected compound that has a relatively high vaporization temperature. The first temperature is in a range of 250°C-500°C in normal atmospheric pressure and environmental temperature. In the first phase shown in FIG. 2, the temperature of the heating element rises with time quickly in a curvilinear form. In one embodiment, the normal atmospheric pressure is a standard atmospheric pressure, and the normal temperature is between 15 and 25 degrees Celsius.

Step S20: in a second phase, controlling power source provided to the heating element such that the temperature of the heating element drops from the first temperature to a second temperature, wherein the second temperature is less than the first temperature.

In the step, the second phase includes a time period of t1-t2, and the phase is a slow temperature drop phase. In this phase, in principle, consistent compound volatilization is expected, and by means of the slow temperature drop, lower gas temperature of cigarette is achieved. The process of slow drop realizes both consistent compound volatilization and comfortable cigarette gas temperature. In the second phase shown in FIG. 2, the temperature of the heating element drops with time in a curvilinear form.

Step S30: in a second phase, controlling power source provided to the heating element such that the temperature of the heating element maintains at the second temperature.

In the step, the third phase includes a time period of t2-t3, and the phase is a temperature holding phase, for example top-side and bottom-side fluctuation of temperature being <=1.5°C. In this phase, in principle, reasonable compound volatilization is expected to keep device mouthfeel and volatilization consistent. In the third phase shown in FIG. 2, the temperature of the heating element is kept in a horizontal rectilinearform with time.

In the embodiment, it is noted that the first temperature and the second temperature are so selected as to ensure that the heating type aerosol generation device continuously generates aerosol in the first, second, and third phases, and the first temperature and the second temperature can be determined according to a temperature range that corresponds to a volatile temperature of an aerosol-forming matter in the matrix.

By means of the technical solution of the embodiment, it is possible to ensure that a cigarette cartridge can continuously generate gel at an optimum temperature by setting a target temperature (the second temperature that is less than the first temperature) for the second phase, and the heat conduction rate of the heating element to the cigarette cartridge is increased by stably holding the second temperature in the third phase, so that it is possible to provide required aerosol substance.

Further, the heating type aerosol generation method of the present invention further comprises:
controlling the power source provided to the heating element to cause the temperature of the heating element to be kept within a predetermined allowable temperature range in the second phase and the third phase.

In the embodiment, the allowable temperature range is determined according to an aerosol-forming base material. The aerosol-forming base material releases some volatile compounds in different temperatures, and a part of the volatile compounds released from the aerosol-forming base material is formed solely through a process of heating, and each of the volatile compounds is released above a specific release temperature. By controlling the maximum operation temperature below the release temperatures of some of the volatile compounds, such components are prevented from being released or formed. The maximum operation temperature is also selected to ensure that the base material does not burn at normal operation conditions.

The allowable temperature range has an upper limit between 450°C-500°C and a lower limit between 250°C-300°C. The first temperature can be between 300°C-450°C, and the second temperature can be between 300°C-400°C. Preferably, the second temperature is not higher than a combustion temperature of a non-expected compound that exists in a regular burning cigarette or around 380 degrees Celsius. Further, the time period of the first phase is less than 20 seconds; the time period of the second phase is greater than 20 seconds; and the time period of the third phase is 200-600 seconds.

In an optional embodiment, in the second phase and the third phase, the power source provided to the heating element is controlled with the following manner so as to have the temperature of the heating element reach the second temperature (the target temperature):
detecting a temperature of the heating element in order to acquire a temperature detection value;
subjecting the temperature detection value and the second temperature to PID computation in order to acquire first heating control information; and
controlling the heating element to carry out periodic heating according to the first heating control information.

In the embodiment, the temperature of the heating element is first detected, and then, the temperature detection value and the target temperature (the second temperature) are applied as PID inputs, so that the first heating control information is outputted after the PID operation to be finally converted, by means of an internally preloaded algorithm, into a heating duty ratio for implementing periodic heating in the heating element.

In another optional embodiment, in the second phase and the third phase, the power source provided to the heating element is controlled with the following manner so as to have the temperature of the heating element reach the second temperature (the target temperature):
detecting a resistance of the heating element in order to acquire a resistance detection value;
subjecting the resistance detection value and a target resistance value to PID computation in order to acquire second heating control information, wherein the target resistance value is determined by the second temperature;
controlling the heating element to carry out periodic heating according to the second heating control information.

In the embodiment, the resistance of the heating element is first detected, and then, the resistance detection value and the target resistance (which is obtained through a reverse computation operation of the second temperature) are applied as PID inputs, so that the second heating control information is outputted after the PID operation to be finally converted, by means of an internally preloaded algorithm, into a heating duty ratio for implementing periodic heating in the heating element.

The above describes two manners of controlling heating of the heating element in the second and third phases. However, if the above-described PID adjustment is also applied to the first phase (the fast temperature rise phase), there may occur relatively large over-adjustment, and in order to avoid the occurrence of such a situation, for heating control applied to the heating element in the first phase, integral adjustment may not be necessarily conducted, or integral terms may not be included when a deviation between the temperature detection value and the target temperature is greater than a preset value. This would reduce the influence of the integral terms during the course of temperature rise, to thereby realize smooth transition for the temperature control stage.

Further, during the course of heating control of the heating element, if one round of heating control is performed in each heating cycle, then when the heating cycle is chosen to be relatively large, the heating element may have a relatively large amplitude for temperature variation in each single heating cycle; and when the heating cycle is chosen to be relatively small, although the heating element may have a relatively small amplitude for temperature variation in each single heating cycle, yet being constrained by the performance of the microprocessor with which the PID control is performed, it may not be possible to fulfill the needs for real-time data collection and processing. Thus, in actual control, a control cycle may be set as an integer multiple of the heating cycle, namely control cycle=heating cycle^{∗}N, N being an integer, and N>=1. This ensures synchronization of heating and control.

Further, in an optional embodiment, the following manner may be applied to acquire the temperature detection value:
detecting the resistance of the heating element in a deactivation interval of the heating cycle of the heating element, in order to acquire the resistance detection value; and
determining the temperature detection value of the heating element according to the resistance detection value.

In the embodiment, it is first noted that since the heating element conducts the periodic heating control according to the duty ratio signal, each heating cycle comprises two parts including a heating interval and a deactivation interval, and the detection of the resistance of the heating element is carried out in the deactivation interval. After the resistance detection value is acquired, the temperature detection value that corresponds to the resistance detection value is calculated according to a corresponding relationship between resistance and temperature.

Further, after the temperature detection value of the heating element is determined according to the resistance detection value, the following is further included: subjecting the temperature detection value to compensation processing according to a device-cold/device-warm state of the heating element.

In the embodiment, it is first noted that when there is a field distribution existing for the temperature of the heating element, with the increase of heating time and the heat conduction increase of the base body of the heating element, for the same resistance, the temperature has a predetermined dropping process, and such a process is related to base body heat conduction of the heating element. In other words, when the heating element itself is in a device-warm state, the situation of volatilization is different from that in a device-cold state, and to fulfill both consistent compound volatilization and comfortable cigarette gas temperature, a compensation algorithm is additionally and internally included. The algorithm is a temperature dropping situation caused by heat conduction, and associated items are time and target temperature, namely the actual temperature detection value T=F(R_{Heater})+f(t,T_{Target}). This ensures consistency is basically achieved for the entire vaping stage and the device-cold state.

Further, the heating type aerosol generation method according to the present invention further comprises:
subjecting the second temperature to compensation processing according to the environment temperature.

In the embodiment, when the external environment temperature changes, in order to maintain the experience in the product vaping stage, it also needs to carry out compensation processing for the target temperature (the second temperature). For example, when the environment temperature in wintertime (such as the environment temperature being lower than 15 degrees Celsius) is relatively low, the second temperature is set higher in order to maintain the temperature vaped into the oral cavity; and when the temperature in summertime is relatively high (such as the environment temperature being higher than 25 degrees Celsius), the second temperature is set low, in order to maintain the temperature vaped into the oral cavity.

Further, to enhance safety performance for operation, the heating type aerosol generation method according to the present invention further comprises:

determining whether the temperature detection value is within a preset range or not, and controlling the heating element to stop heating if not within the preset range, wherein the preset range has an upper limit between 380°C-500°C and a lower limit between 250°C-300°C; or

determining whether the power source provided to the heating element in a predetermined time interval exceeds a preset energy value or not, and controlling the heating element to stop heating if exceeding the preset energy value.

In the embodiment, through the entire temperature control phase, the value of temperature is calculated through real-time detection of the resistance of the heating element. In abnormal conditions, when the resistance detection value or the temperature detection value of the heating element exceeds the preset upper or lower limits, the device emergently shuts down to avoid risk of safety. Further, when the power source provided of the heating element in the predetermined time interval (unit time) is greater than the preset energy level in a condition of the environment temperature, the device also proceeds with emergency shut-down to avoid the risk of safety. For example, in a regular condition, the energy supply of the heating element is between 0.5-2.0W, in case that it exceeds 3.0W in the predetermined time interval (such as 1-5 S), the emergency shut-down is implemented.

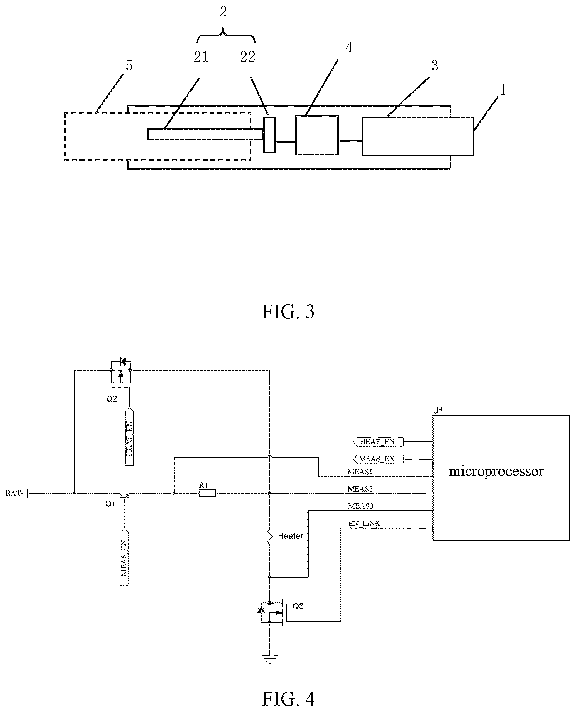

As shown in FIG. 3, a structural illustration of a heating type aerosol generation device according to a first embodiment of the present disclosure is provided. The heating type aerosol generation device of the embodiment comprises a housing 1, and a heating element 2, a power source 3, and a control circuit 4 housed in the housing, wherein the power source 3 is configured to supply energy to the heating element 2; the control circuit 4 is configured to control a power source provided to the heating element 2 to cause the temperature of the heating element 2 to rise from an initial temperature to a first temperature in a first phase; to control the power source provided to the heating element 2 to cause the temperature of the heating element 2 to drop from the first temperature to a second temperature in a second phase, wherein the second temperature is less than the first temperature; and to control the power source provided to the heating element 2 to cause the temperature of the heating element 2 to keep at the second temperature in a third phase. In the instant embodiment, an aerosol-forming base material 5 is at least partly inserted from an end of the housing into an interior of the housing 1, and the heating element 2 penetrates into interior of the aerosol-forming base material 5 for heating. The aerosol-forming base material 5 comprises a cigarette. The heating element 2 comprises a plate-like heating body 21 and a holder 22 that is configured to hold and fix the heating body.

Further, the control circuit comprises a detection module and a microprocessor, wherein the detection module is configured to detect a temperature/resistance of the heating element in order to acquire a temperature/resistance detection value; the microprocessor is configured to subject the temperature/resistance detection value and the second temperature/target resistance to PID computation in order to acquire heating control information, and to control the heating element to carry out periodic heating according to the heating control information, wherein the target resistance is determined by the second temperature.

FIG. 4 is a circuit illustration of the heating type aerosol generation device according to the first embodiment of the present disclosure. The heating type aerosol generation device of the embodiment comprises a heating element Heater, a power source (not shown), and a control circuit, and the control circuit comprises a microprocessor U1 and a detection module, in which the detection module comprises: a first transistor Q1, a second transistor Q2, a third transistor Q3, and a reference resistor R1, wherein a first end of the first transistor Q1 and a first end of the second transistor Q2 are respectively connected to a positive terminal BAT+ of the power source; a second end of the first transistor Q1 is connected to a first end of the reference resistor R1; a second end of the reference resistor R1 and a second end of the second transistor Q2 are individually connected to a first end of the heating element Heater; a second end of the heating element Heater is connected to a first end of the third transistor Q3; a second end of the third transistor Q3 is grounded; a first input terminal of the microprocessor U1 is connected to the second end of the first transistor Q1; a second input terminal of the microprocessor U1 is connected to the second end of the reference resistor R1; a third input terminal of the microprocessor U1 is connected to the second end of the heating element Heater; the first output terminal of the microprocessor U1 is connected to the control terminal of the first transistor Q1; the second output terminal of the microprocessor U1 is connected to the control terminal of the second transistor Q2; and the third output terminal of the microprocessor U1 is connected to the control terminal of the third transistor Q3.

Further, in the embodiment, the first transistor Q1 is a NPN type triode, and the first end of the first transistor Q1 is the collector terminal; the second end of the first transistor Q1 is the emitter terminal; the control terminal of the first transistor Q1 is the base terminal. The second transistor Q2 is a P type field effect transistor, and the first end of the second transistor Q2 is the source terminal; the second end of the second transistor Q2 is the drain terminal; and the control terminal of the second transistor Q2 is the gate terminal. The third transistor Q3 is an N type field effect transistor, and the first end of the third transistor Q3 is the drain terminal; the second end of the third transistor Q3 is the source terminal; and the control terminal of the third transistor Q3 is the gate terminal. It is appreciated that in other embodiments, the three transistors can be transistors of other types.

The following describes the operation principle of the circuit:
It is first noted that the reference resistor R1 is a high precision resistor featuring both measurement precision and the amount of heat generation of the reference resistor R1, and the range of the resistance of R1 is generally between one time of R_{Heater} to 10 times of R_{Heater}. The range of output voltage of the power source is 2.8V-4.2V

When the microprocessor U1 controls the second transistor Q2 and the third transistor Q3 to conduct on, and also controls the first transistor Q1 to cut off, the power source forms, by means of the second transistor Q2, the heating element Heater, and the third transistor Q3, a heating loop, with which the heating element Heater is heated. Further, the microprocessor U1, through acquiring the voltage of the third input terminal, calculates, in an approximate manner, the current I of the heating loop, namely I=VMEAS3/R_{Q3}, where R_{Q3} is an internal resistance of the third transistor Q3 when it is conducted on, wherein VMEAS3 is the voltage of the third input terminal of the microprocessor U1. Thus, occurrence of overcurrent can be identified according to the current I, and overcurrent protection can be implemented in the occurrence of overcurrent.

When the microprocessor U1 controls the first transistor Q1 and the third transistor Q3 to conduct on, and also controls the second transistor Q2 to cut off, the power source forms, by means of the first transistor Q1, the reference resistor R1 and the heating element Heater, and the third transistor Q3, a resistance measuring loop, and at this time, voltage V1 is formed on the reference resistor R1, and voltage V2 is formed on the heating element Heater. The microprocessor U1 determines V1 by acquiring the voltages of the first input terminal and the second input terminal thereof, namely V1=MEAS1-MEAS2, and the microprocessor U1 determines V2 by acquiring the voltages of the second input terminal and the third input terminal thereof, namely V2=MEAS2-MEAS3. Then, the resistance R_{Heater} of the heating element Heater is calculated according to the following formula, namely R_{Heater}=(MEAS2-MEAS3)^{∗}R1/(MEAS1- MEAS2), where MEAS1 is the voltage of the first input terminal of the microprocessor U1 and MEAS2 is the voltage of the second input terminal of the microprocessor U1.

It is noted that in a single heating cycle, the microprocessor U1 controls enablement of the second transistor Q2 according to the ON time of the duty ratio, in order to fulfil heating control of the heating element. In the cut-off stage of the second transistor Q2, a part or the entirety of the time period of the cut-off stage can be selected to control the enablement of the first transistor Q1, so as to calculate out R_{Heater}. To avoid relatively large fluctuation of temperature of the heating element in the process from being conducted on to being disabled for the second transistor Q2, the time period for one single heating cycle can be selected to be between 1mS-50mS.

In another embodiment of the present disclosure, the heating type aerosol generation method of the embodiment further comprises, after the third phase:

in a fourth phase, controlling the power source provided to the heating element to cause the temperature of the heating element to gradually drop from the second temperature.

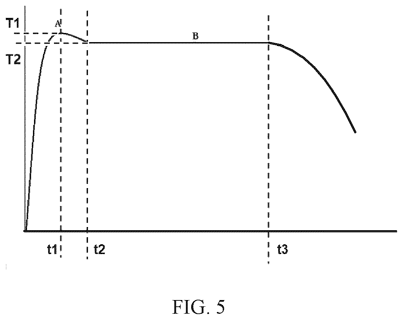

In the step, the fourth phase includes a time period after t3, reduced with the vaporization of the base material, and the heating element is controlled to gradually lower down the temperature to finally reach a target of the aerosol base material reaching an expected amount of atomization at the end. In the fourth phase shown in FIG. 5, the temperature of the heating element slowly drops with time in a curvilinear form. It is obvious that in some other embodiments, slowly dropping can be made in an inclined linear form.

The above provides only the preferred embodiments of the present invention and is not intended to limit the present invention. Those having ordinary skill in the art may appreciate that there are various changes and variations for the present invention. Any modification, equivalent substitute, and improvement that is made under the spirit and principle of the present invention is included in the scope of the claims for the invention.

## Claims

1. A heating type aerosol generation method, **characterized by** comprising:
in a first phase, controlling a power source provided to a heating element such that a temperature of the heating element rises from an initial temperature to a first temperature;
in a second phase, controlling the power source provided to the heating element such that the temperature of the heating element drops from the first temperature to a second temperature, wherein the second temperature is less than the first temperature; and
in a third phase, controlling the power source provided to the heating element such that the temperature of the heating element maintains at the second temperature.

2. The heating type aerosol generation method according to claim 1, **characterized in that**
in the first phase, the temperature of the heating element rises with time in a curvilinear form;
in the second phase, the temperature of the heating element drops with time in a curvilinear form; and
in the third phase, the temperature of the heating element is stabilized in a rectilinear form.

3. The heating type aerosol generation method according to claim 1, **characterized by** further comprising:
controlling power source provided to the heating element such that the temperature of the heating element to be kept within a predetermined allowable temperature range in the second phase and the third phase.

4. The heating type aerosol generation method according to claim 3, **characterized in that** the allowable temperature range has an upper limit between 450°C-500°C and a lower limit between 250°C-300°C.

5. The heating type aerosol generation method according to claim 1, **characterized in that**
the first temperature is between 300°C-450°C; and
the second temperature is between 300°C-400°C.

6. The heating type aerosol generation method according to claim 1, **characterized in that**
a time period of the first phase is less than 20 seconds;
a time period of the second phase is greater than 20 seconds; and
a time period of the third phase is 200-600 seconds.

7. The heating type aerosol generation method according to any one of claims 1-6, **characterized in that** in the second phase and the third phase, controlling the power source provided to the heating element to make the temperature of the heating element reach the second temperature is performed with the following process:
detecting a temperature of the heating element in order to acquire a temperature detection value;
subjecting the temperature detection value and the second temperature to PID computation in order to acquire first heating control information; and
controlling the heating element to carry out periodic heating according to the first heating control information;
or,
detecting a resistance of the heating element in order to acquire a resistance detection value;
subjecting the resistance detection value and a target resistance value to PID computation in order to acquire second heating control information, wherein the target resistance value is determined by the second temperature;
controlling the heating element to carry out periodic heating according to the second heating control information.

8. The heating type aerosol generation method according to claim 7, **characterized in that** the step of detecting a temperature of the heating element to acquire a temperature detection value comprises:
detecting the resistance of the heating element in a deactivation interval of a heating cycle of the heating element, in order to acquire the resistance detection value; and
determining the temperature detection value of the heating element according to the resistance detection value.

9. The heating type aerosol generation method according to claim 8, **characterized by** further comprising, after the step of determining the temperature detection value of the heating element according to the resistance detection value:
subjecting the temperature detection value to compensation processing according to a device-cold/device-warm state of the heating element.

10. The heating type aerosol generation method according to claim 7, **characterized by** further comprising:
subjecting the second temperature to compensation processing according to an environment temperature.

11. The heating type aerosol generation method according to claim 7, **characterized by** further comprising:
determining whether the temperature detection value or the resistance detection value is within a preset range or not; and
controlling the heating element to stop heating if not within the preset range.

12. The heating type aerosol generation method according to claim 1, **characterized by** further comprising:
determining whether the power source provided to the heating element in a predetermined time interval exceeds a preset energy value or not; and
controlling the heating element to stop heating if exceeding the preset energy value.

13. The heating type aerosol generation method according to claim 1, **characterized by** further comprising:
in a fourth phase, controlling the power source provided to the heating element to cause the temperature of the heating element to gradually drop from the second temperature.

14. A heating type aerosol generation device, comprising a heating element and a power source operable to supply energy to the heating element, **characterized by** further comprising:
a control circuit, which is operable to control a power source provided to the heating element to cause a temperature of the heating element to rise from an initial temperature to a first temperature in a first phase; to control the power source provided to the heating element to cause the temperature of the heating element to drop from the first temperature to a second temperature in a second phase, wherein the second temperature is less than the first temperature; and to control the power source provided to the heating element to keep the temperature of the heating element at the second temperature in a third phase.

15. The heating type aerosol generation device according to claim 13, **characterized in that** the control circuit comprises:
a detection module, which is operable to detect a temperature/resistance of the heating element in order to acquire a temperature/resistance detection value; and
a microprocessor, which is operable to subject the temperature/resistance detection value and the second temperature/target resistance to PID computation in order to acquire heating control information, and to control the heating element to carry out periodic heating according to the heating control information, wherein the target resistance is determined by the second temperature.

16. The heating type aerosol generation device according to claim 15, **characterized in that** the detection module comprises: a first transistor, a second transistor, a third transistor, and a reference resistor, wherein a first end of the first transistor and a first end of the second transistor are connected to a positive terminal of the power source; a second end of the first transistor is connected to a first end of the reference resistor; a second end of the reference resistor and a second end of the second transistor are connected to a first end of the heating element; a second end of the heating element is connected to a first end of the third transistor; a second end of the third transistor is grounded; a first input terminal of the microprocessor is connected to the second end of the first transistor; a second input terminal of the microprocessor is connected to the second end of the reference resistor; a third input terminal of the microprocessor is connected to the second end of the heating element; the first output terminal of the microprocessor is connected to the control terminal of the first transistor; the second output terminal of the microprocessor is connected to the control terminal of the second transistor; and the third output terminal of the microprocessor is connected to the control terminal of the third switching tub.

17. The heating type aerosol generation device according to claim 16, **characterized in that**
the first transistor comprises an NPN type triode, and the first end of the first transistor is the collector terminal, the second end of the first transistor is the emitter terminal, the control terminal of the first transistor is the base terminal;
the second transistor comprises a P type field effect transistor, and the first end of the second transistor is the source terminal, the second end of the second transistor is the drain terminal, the control terminal of the second transistor is the gate terminal; and
the third transistor comprises an N type field effect transistor, and the first end of the third transistor is the drain terminal, the second end of the third transistor is the source terminal, the control terminal of the third transistor is the a gate terminal.
